# EUROPÄISCHE PATENTSCHRIFT

(11) **EP 2 008 348 B1**
(45) Veröffentlichungstag und Bekanntmachung des Hinweises auf die Patenterteilung: **05.03.2014**
(21) Anmeldenummer: 07728012.1
(22) Anmeldetag: 12.04.2007
(51) Int. Cl.: H02B 13/02

(54) **LUFTISOLIERTE MITTELSPANNUNGS-SCHALTANLAGE**
AIR-INSULATED MEDIUM-VOLTAGE SWITCHGEAR ASSEMBLY
EQUIPEMENT DE COMMUTATION A MOYENNE TENSION A ISOLATION PAR AIR

(30) Priorität: 20.04.2006 DE 102006019356
(43) Veröffentlichungstag der Anmeldung: 31.12.2008
(73) Patentinhaber: Siemens Aktiengesellschaft, 80333 München (DE)
(72) Erfinder: KARADENIZ, Tahsin, 34860 Istanbul (TR); SAPCI, Ahmet, 34724 Istanbul (TR)
(86) Internationale Anmeldenummer: PCT/EP2007/053544
(87) Internationale Veröffentlichungsnummer: WO 2007/122109

(56) Entgegenhaltungen:
- DE-B- 1 131 302
- FR-A1- 2 258 726
- US-A- 3 562 593

## Beschreibung

Die Erfindung betrifft eine luftisolierte Mittelspannungs-Schaltanlage mit einem Sammelschienenraum und mindestens einem von dem Sammelschienenraum mittels einer Wand abgetrennten weiteren Funktionsraum mit einem Schaltermodul, wobei sich Sammelschienenleiter aus dem Sammelschienenraum durch die Wand in den weiteren Funktionsraum erstrecken, wobei die Wand aus einer isolierenden Platte mit Durchgangsöffnungen für jeden Sammelschienenleiter ausgebildet ist und die Sammelschienenleiter an den Durchgangsöffnungen befestigt sind.

Eine luftisolierte Mittelspannungs-Schaltanlage ist in der Siemens-Druckschrift "8BT2-System 36kV, 31,5 kA Air insulated, Metal Clad Truck Type Switchgear" dargestellt. Bei dieser luftisolierten Mittelspannungs-Schaltanlage ist ein Sammelschienenraum von einem Leistungsschalterraum als weiterem Funktionsraum durch eine metallische Wand abgetrennt. In dem Leistungsschalterraum ist ein Leistungsschalter als bewegliches Schaltermodul angeordnet, welcher zwischen einer Funktionsstellung und einer Wartungsstellung beweglich ist. Sammelschienenleiter zur Verbindung von Sammelschienen des Sammelschienenraumes mit dem Leistungsschalterraum erstrecken sich aus dem Sammelschienenraum durch in der metallischen Wand angeordnete Durchführungen in den Leistungsschalterraum. Bei dieser Schaltanlage sind die Durchführungen für jede Phase aus einem isolierenden Material u-förmig ausgebildet und erstrecken sich sowohl in den Sammelschienenraum als auch in den Leistungsschalterraum, um eine ausreichende Kriechstromfestigkeit auszubilden. Für die Sammelschienen-Verbindungsleiter sind dabei im Sammelschienenraum Stützer als Halterungen vorgesehen.

Eine luftisolierte Mittelspannungsanlage der eingangs genannten Art ist aus der FR 2 258 726 A1 bekannt.

Aufgabe der vorliegenden Erfindung ist es, eine Schaltanlage der eingangs erwähnten Art auszubilden, welche über eine kostengünstige Konstruktion verfügt.

Erfindungsgemäß gelöst wird diese Aufgabe bei einer luftisolierten Mittelspannungs-Schaltanlage der eingangs erwähnten Art dadurch, dass an der isolierenden Platte mehrere parallel zueinander ausgerichtete Phasentrennwände gehalten sind, welche sich in den Sammelschienenraum und den weiteren Funktionsraum erstrecken.

Eine derartige Schaltanlage ist in vorteilhafterweise kostengünstig, weil durch die isolierende Platte mit Durchgangsöffnungen eine Durchführung gebildet ist, ohne dass dazu konstruktiv aufwändige und damit teure Bauteile zur Isolierung der Sammelschienenleiter gegenüber einer metallischen Wand benötigt werden. Des Weiteren kann auch auf aufwändige Stützer oder andere Befestigungsmaßnahmen für die Sammelschienenleiter verzichtet werden, was ebenfalls in vorteilhafterweise kostengünstig ist, wobei Mittels der Phasentrennwände in einfacher und kostengünstiger Weise eine Isolation der einzelnen Phasen gegeneinander ausgebildet und bei einem geringen Volumen der Schaltanlage die erforderliche Kriechstromfestigkeit sowohl im Sammelschienenraum als auch im weiteren Funktionsraum gewährleistet wird.

In einer bevorzugten Ausgestaltung weist die isolierende Platte eine z-artige Gestalt mit einem ersten Schrägbereich zur Befestigung an einem Halteelement der Schaltanlage, einem Wandungsbereich mit den Durchgangsöffnungen und einem zweiten Schrägbereich zur Befestigung an einem zweiten Halteelement der Schaltanlage auf.

Die z-artige Gestalt führt in vorteilhafterweise zu einem reduzierten Raumbedarf der Schaltanlage, weil durch die Z-artige Gestalt mit dem ersten und dem zweiten Schrägbereich die Sammelschienenleiter in optimalem Abstand zu der isolierenden Platte geführt werden können und dadurch das Volumen des Sammelschienenraums reduziert werden kann. Des Weiteren wird durch die Schrägbereiche gleichzeitig die erforderliche Kriechstromfestigkeit gewährleistet. Dies alles führt insgesamt zu einem reduzierten Raumbedarf der Schaltanlage und somit zu einem kostengünstigen Aufbau.

In einer zweckmäßigen Ausgestaltung erstrecken sich durch die jeweilige Durchgangsöffnung vom Sammelschienenraum in den weiteren Funktionsraum leitende Bolzen, an deren in den Sammelschienenraum weisenden Enden die Sammelschienenleiter befestigt sind. Mittels derartiger Bolzen ist in einfacher Weise eine Befestigung der Sammelschienenleiter und gleichzeitig eine leitende Verbindung zwischen dem Sammelschienenraum und dem weiteren Funktionsraum ausgebildet.

In weiterer Ausgestaltung der Erfindung verfügt die isolierende Platte über mehrere parallel zueinander verlaufende Aufnahmeschlitze zur Aufnahme der Phasentrennwände, welche Aufnahmeschlitze sich zumindest über einen Schrägbereich und dem Wandungsbereich erstrecken. Mittels derartiger Aufnahmeschlitze zur Anordnung von Phasentrennwänden ist in einfacher und kostengünstiger Weise eine Halterung für die Phasentrennwände ausgebildet.

In besonders vorteilhafter Ausgestaltung sind die Phasentrennwände in den Aufnahmeschlitzen der isolierenden Platte verklebt. Eine derartige Befestigung der Phasentrennwände ist einfach und kostengünstig.

Die Erfindung wird im Folgenden anhand der Zeichnungen und eines Ausführungsbeispiels mit Bezug auf die beiliegenden Figuren näher erläutert.

Es zeigen:
- Figur 1: ein Ausführungsbeispiel der erfindungsgemäßen luft-isolierten Schaltanlage in einer Querschnittsansicht;
- Figur 2: eine perspektivische Ansicht einer isolierenden Platte mit darin angeordneten Phasentrennwänden;
- Figur 3: eine Draufsicht der isolierenden Platte mit den Phasentrennwänden aus Figur 2.

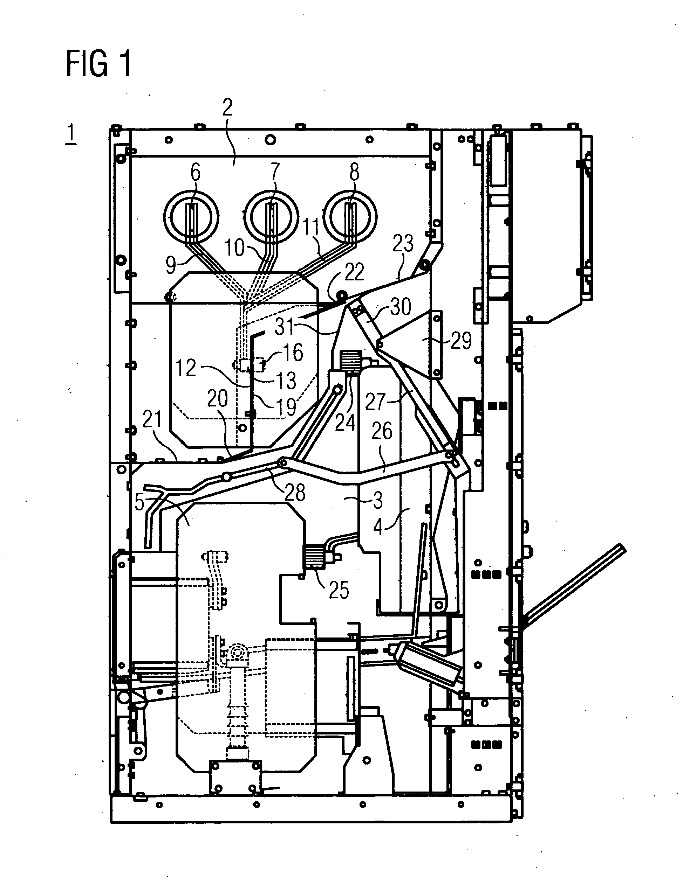

Figur 1 zeigt eine luftisolierte Mittelspannungs-Schaltanlage 1 mit einem Sammelschienenraum 2, einem Leistungsschalterraum 3 als weiteren Funktionsraum 3 mit einem Schaltermodul 4 und einem Kabelabgangsbereich 5. Durch den Sammelschienenraum 2 erstrecken sich quer zur Schaltanlage 1 Sammelschienen 6, 7 und 8, welche über Sammelschienenleiter 9, 10 und 11 an einer Wand 12 in Form einer isolierenden Platte 12 befestigt sind. Jeder der Sammelschienenleiter 9, 10 und 11 erstreckt sich jeweils zu einer Durchgangsöffnung 13, 14, 15 hin, von denen der Übersichtlichkeit halber in der Figur 1 nur die Durchgangsöffnung 13 bezeichnet ist. In den jeweiligen Durchgangsöffnungen 13, 14 und 15 sind Durchführungsbolzen 16, 17, 18 angeordnet, welche sich durch die Wand 12 hindurch erstrecken und an der Wand 12 befestigt sind, beispielsweise mittels Verschraubungen. An dem sich in dem Sammelschienenraum erstreckenden jeweiligen Ende der Durchführungsbolzen 16, 17, 18 sind die Sammelschienenleiter 9, 10 und 11 jeweils ebenfalls befestigt. Die isolierende Platte 12 als Wand 12 umfasst einen Wandungsbereich 19, in welchem die Durchgangsöffnungen 13, 14 und 15 angeordnet sind, sowie einen ersten Schrägbereich 20, welcher an einer Gehäuseplatte 21 der Schaltanlage 1 befestigt ist, sowie einen zweiten Schrägbereich 22, welcher an einer weiteren Gehäuseplatte 23 befestigt ist. Das Schaltermodul weist erste elektrische Kontaktmittel 24 sowie zweite elektrische Kontaktmittel 25 auf, zwischen denen ein figürlich nicht dargestellter Leistungsschalter angeordnet ist. An dem Schaltermodul gelenkig angeordnet ist eine Hebelanordnung aus Hebeln 26, 27, wobei der erste Hebel 26 in einer Führung 28 gelagert ist und mit einem figürlich nicht dargestellten verschiebbaren ersten Trennblech verbunden ist. Der zweite Hebel 27 ist an einem Halteelement 29 drehbar gelagert und an seinem Ende 30 mit einem zweiten beweglichen Trennblech 31 verbunden. Die beweglichen ersten und zweiten Trennbleche dienen zur Abschirmung des Leistungsschalterraumes vom Sammelschienenraum, wenn sich das Schaltermodul 4 in seiner Wartungsstellung befindet, und werden beim Überführen des Schaltermoduls 4 aus der Wartungsposition in die Funktionsposition über die Hebelanordnung mit den Hebeln 26, 27 derart verschwenkt, dass die Verbindungsmittel 24 bzw. 25 elektrische Verbindungen mit den Durchführungsbolzen 16, 17 und 18 bzw. mit dem Kabelabgangsbereich 5 ausbilden können.

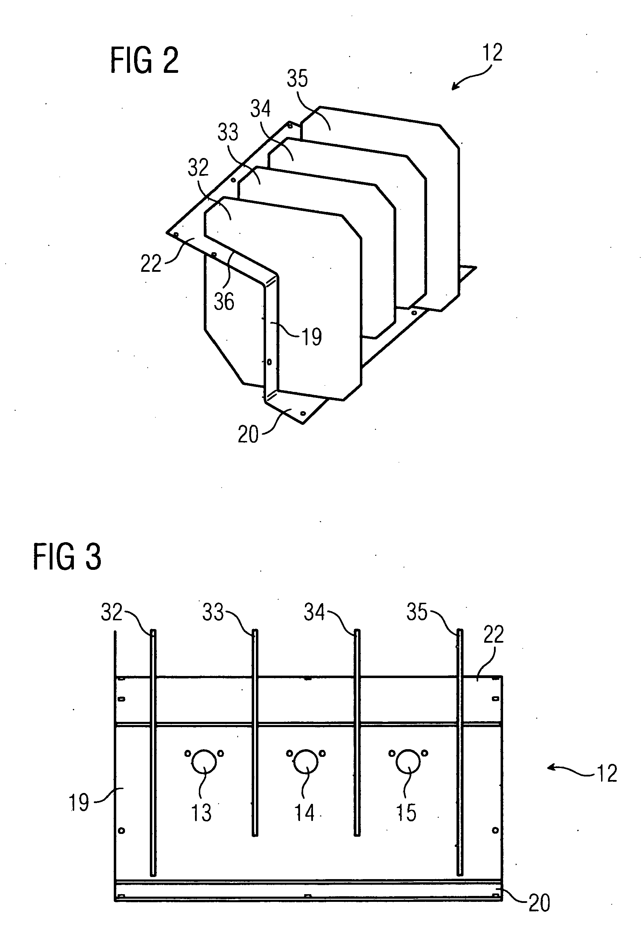

Figur 2 zeigt die Wand 12 aus Figur 1 in einer perspektivischen Ansicht. Die Wand 12 in Form der isolierenden Platte 12 weist eine z-artige Gestalt auf mit dem Wandungsbereich 19, dem ersten Schrägbereich 20 und dem zweiten Schrägbereich 22. In der isolierenden Platte 12 sind Aufnahmeschlitze zur Aufnahme von Phasentrennwänden 32, 33, 34 und 35 ausgebildet, von denen der Übersichtlichkeit halber nur einer mit 36 bezeichnet ist. Die Aufnahmeschlitze erstrecken sich entlang des zweiten Schrägbereichs und des Wandungsbereiches dergestalt, dass sich die Phasentrennwände 32, 33, 34 und 35 zu beiden Seiten der isolierenden Platte 12 sowohl in den Sammelschienenraum als auch in den Leistungsschalterraum hinein erstrecken. Die Phasentrennwände 32 bis 35 weisen eine im Wesentlichen rechteckige Gestalt auf mit abgeschrägten Ecken.

Figur 3 zeigt eine Draufsicht der Durchführung 12 aus Figur 2, bei der insbesondere die Durchgangsöffnungen 13, 14 und 15 für die Durchführungsbolzen 16, 17 und 18 dargestellt sind.

In der Darstellung der Figur 1 befindet sich das Schaltermodul 4 in einer Wartungsstellung der Schaltanlage 1, bei der die beweglichen ersten und zweiten Trennbleche gemeinsam eine geerdete Abschirmung mit den Gehäuseblechen 21 und 23 der Schaltanlage 1 bilden, so dass Wartungsarbeiten im Leistungsschalterraum 3 der Schaltanlage 1 durchgeführt werden können. Wird die Schaltanlage 1 in Betrieb genommen, so wird von einem Bediener eine Bewegung in das Schaltermodul 4 eingeleitet, welches in seine Betriebsposition überführt wird, wobei über die Hebelanordnung mit den ersten und zweiten Hebeln 26 und 27 die ersten und zweiten Trennbleche in eine Position verschwenkt werden, so dass eine leitende Verbindung der Kontaktmittel 24 mit den Durchführungsbolzen 16, 17 und 18 der Durchführung 12 ausgebildet werden kann, wobei gleichzeitig durch die Kontaktmittel 25 eine leitende Verbindung mit dem Kabelabgangsbereich 5 ausgebildet wird. In dieser Betriebsposition des Schaltermoduls 4 ist eine elektrisch leitende Verbindung zwischen den Sammelschienen 6, 7 und 8 und dem Kabelabgangsbereich 5 der Schaltanlage 1 über die Sammelschienenleiter 9, 10, 11 und das Schaltmodul 4 ausgebildet, welche mittels des figürlich nicht dargestellten Leistungsschalter schaltbar ist.

### Bezugszeichenliste

- 1: luftisolierte Mittelspannungs-Schaltanlage
- 2: Sammelschienenraum
- 3: Leistungsschalterraum
- 4: Schaltermodul
- 5: Kabelabgangsbereich
- 6, 7, 8: Sammelschienen
- 9, 10, 11: Sammelschienenleiter
- 12: Wand
- 13, 14, 15: Durchgangsöffnungen
- 16, 17, 18: Durchführungsbolzen
- 19: Wandungsbereich
- 20: erster Schrägbereich
- 21: Gehäuseplatte
- 22: zweiter Schrägbereich
- 23: weitere Gehäuseplatte
- 24: erste Verbindungsmittel
- 25: zweite Verbindungsmittel
- 26, 27: Hebel
- 28: Führung
- 29: Halteelement
- 30: Hebelende
- 31: zweites Trennblech
- 32, 33, 34, 35: Phasentrennwände
- 36: Aufnahmeschlitz

## Patentansprüche

1. Luftisolierte Mittelspannungs-Schaltanlage (1) mit einem Sammelschienenraum (2) und mindestens einem von dem Sammelschienenraum (2) mittels einer Wand (12) abgetrennten weiteren Funktionsraum (3) mit einem Schaltermodul (4), wobei sich Sammelschienenleiter (9, 10, 11) aus dem Sammelschienenraum (2) durch die Wand (12) in den weiteren Funktionsraum (3) erstrecken, wobei die Wand (12) aus einer isolierenden Platte (12) mit Durchgangsöffnungen (13, 14, 15) für jeden Sammelschienenleiter (9, 10, 11) ausgebildet ist und die Sammelschienenleiter (9, 10, 11) an den Durchgangsöffnungen (13, 14, 15) befestigt sind,
**dadurch gekennzeichnet, dass** an der isolierenden Platte (12) mehrere parallel zueinander ausgerichtete Phasentrennwände (32, 33, 34, 35) gehalten sind, welche sich in den Sammelschienenraum (2) und den weiteren Funktionsraum (3) erstrecken.

2. Luftisolierte Mittelspannungs-Schaltanlage nach Anspruch 1,
**dadurch gekennzeichnet, dass** die isolierende Platte (12) eine z-artige Gestalt mit einem ersten Schrägbereich (20) zur Befestigung an einem Halteelement (21) der Schaltanlage (1), einem Wandungsbereich (19) mit den Durchgangsöffnungen (13, 14, 15) und einem zweiten Schrägbereich (22) zur Befestigung an einem zweiten Halteelement (23) der Schaltanlage (1) aufweist.

3. Luftisolierte Mittelspannungs-Schaltanlage nach Anspruch 1 oder 2,
**dadurch gekennzeichnet, dass** sich durch die jeweilige Durchgangsöffnung (13, 14, 15) vom Sammelschienenraum (2) in den weiteren Funktionsraum (3) leitende Bolzen (16, 17, 18) erstrecken, an deren in den Sammelschienenraum (2) weisenden Enden die Sammelschienenleiter (9, 10, 11) befestigt sind.

4. Luftisolierte Mittelspannungs-Schaltanlage nach einem der Ansprüche 1 bis 3,
**dadurch gekennzeichnet, dass** die isolierende Platte (12) über mehrere parallel zueinander verlaufende Aufnahmeschlitze (36, 37, 38, 39) zur Aufnahme der Phasentrennwände (32, 33, 34, 35) verfügt, welche Aufnahmeschlitze (36, 37, 38, 39) sich zumindest über einen Schrägbereich (20) und den Wandungsbereich (19) erstrecken.

5. Luftisolierte Mittelspannungs-Schaltanlage nach einem der Ansprüche 1 bis 4,
**dadurch gekennzeichnet, dass** die Phasentrennwände (32, 33, 34, 35) in den Aufnahmeschlitzen (36, 37, 38, 39) der isolierenden Platte (12) verklebt sind.

## Claims

1. Air-insulated medium voltage switchgear assembly (1) having a busbar space (2) and at least one further functional space (3) with a switch module (4) which is separated from the busbar space (2) by means of a wall (12), wherein busbar conductors (9, 10, 11) extend from the busbar space (2) through the wall (12) into the further functional space (3), wherein the wall (12) is embodied from an insulating plate (12) with through-openings (13, 14, 15) for each busbar conductor (9, 10, 11) and the busbar conductors (9, 10, 11)are fastened to the through-openings (13, 14, 15),
**characterised in that**
a number of phase partition walls (32, 33, 34, 35) aligned in parallel to one another are held on the insulating plate (12), said phase partition walls extending into the busbar space (2) and the further functional space (3).

2. Air-insulated medium voltage switchgear assembly according to claim 1,
**characterised in that**
the insulating plate (12) has a z-type design with a first slanted area (2) for fastening to a holding element (21) of the switchgear assembly (1), a wall region (19) with the through-openings (13, 14, 15) and a second slanted area (22) for fastening to a second holding element (23) of the switchgear assembly (1).

3. Air-insulated medium voltage switchgear assembly according to claim 1 or 2,
**characterised in that**
conducting bolts (16, 17, 18) extend through the respective through-opening (13, 14, 15) from the busbar space (2) into the further functional space (3), to the ends of which pointing into the busbar space (2) the busbar conductors (9, 10, 11) are fastened.

4. Air-insulated medium voltage switchgear assembly according to one of claims 1 to 3,
**characterised in that**
the insulating plate (12) has a number of receiving slots (36, 37, 38, 39) running in parallel to one another in order to receive the phase partition walls (32, 33, 34, 35), said receiving slots (36, 37, 38, 39) extending at least beyond a slanted area (20) and the wall area (19).

5. Air-insulated medium voltage switchgear assembly according to one of claims 1 to 4,
**characterised in that**
the phase separating walls (32, 33, 34, 35) are glued in the receiving slots (36, 37, 38, 39) of the insulating plate (12).

## Revendications

1. Equipement (1) de commutation à moyenne tension à isolation par de l'air, comprenant une chambre (2) de barres collectrices et au moins une autre chambre (3) de fonction séparée de la chambre (2) de barres collectrices au moyen d'une paroi (12) et ayant un module (4) de commutateur, des conducteurs (9, 10, 11) de barres collectrices s'étendant de la chambre (2) de barres collectrices dans l'autre chambre (3) de fonction en passant à travers la paroi (12), la paroi (12) étant constituée d'une plaque (12) isolante ayant des ouvertures (13, 14, 15) de passage pour chaque conducteur (9, 10, 11) de barres collectrices et les conducteurs (9, 10, 11) de barres collectrices étant fixés aux ouvertures (13, 14, 15) de passage,
**caractérisé en ce que**
sur la plaque (12) isolante, sont maintenues plusieurs parois (32, 33, 34, 35) de séparation de phase, qui sont parallèles entre elles et qui s'étendent dans la chambre (2) de barres collectrices et dans l'autre chambre (3) de fonction.

2. Equipement de commutation à moyenne tension à isolation par de l'air suivant la revendication 1,
**caractérisé en ce que**
la plaque (12) isolante a une forme en z en ayant une première partie (22) inclinée de fixation à un élément (21) de maintien de l'équipement (1) de commutation, une partie (19) de paroi ayant les ouvertures (13, 14, 15) de passage et une deuxième partie (22) inclinée de fixation à un deuxième élément (23) de maintien de l'équipement (1) de commutation.

3. Equipement de commutation à moyenne tension à isolation par de l'air suivant la revendication 1 ou 2,
**caractérisé en ce que**
dans les ouvertures (13, 14, 15) respectives de passage, s'étendent des axes (16, 17, 18) conducteurs, qui vont de la chambre (2) de barres collectrices à l'autre chambre (3) de fonction et aux extrémités, tournées vers la chambre (2) de barres collectrices, desquelles les conducteurs (9, 10, 11) de barres collectricess sont fixés.

4. Equipement de commutation à moyenne tension à isolation par de l'air suivant les revendications 1 à 3,
**caractérisé en ce que**
la plaque (12) isolante dispose de plusieurs fentes (36, 37, 38, 39) de réception s'étendant parallèlement entre elles et destinées à la réception des parois (32, 33, 34, 35) de séparation de phase, lesquelles fentes (36, 37, 38, 39) de réception s'étendent au moins sur la partie (20) inclinée et sur la partie (19) de paroi.

5. Equipement de commutation à moyenne tension à isolation par de l'air suivant les revendications 1 à 4,
**caractérisé en ce que**
les parois (32, 33, 34, 35) de séparation de phase sont collées dans les fentes (36, 37, 38, 39) de réception de la plaque (12) isolante.
